Europäisches Patentamt

European Patent Office

Office européen des brevets

(11) Publication number: **0 152 497**
A1

# EUROPEAN PATENT APPLICATION

(21) Application number: 84101638.9

(22) Date of filing: 17.02.84

(51) Int. Cl.⁴: **A 44 B 18/00**, B 32 B 27/12 // A43C11/00

(43) Date of publication of application: 28.08.85
Bulletin 85/35

(71) Applicant: VELCRO INDUSTRIES B.V., Nieuwe Weteringstraat 38, NL-1017 ZX Amsterdam (NL)

(72) Inventor: Schaefer, Philipp, Oberstrasse 16, D-3000 Hannover 1 (DE)
Inventor: Schaefer, Helmut, Via Carmine 74 Avellino, I-83013 Mercogliano (IT)

(74) Representative: Boeckmann, Peter, Dipl.-Ing. et al, Patentanwälte Dipl.-Ing. Peter Boeckmann, Dipl.-Ing. Leo Brauneiss Strohgasse 10, A-1030 Wien (AT)

(84) Designated Contracting States: **AT BE CH DE FR GB IT LI LU NL SE**

(54) Laminate product for use as part of a separable fastener, method and apparatus for attaching separable fastener tapes to a panel, and laminate panel for footwear fastenings.

(57) The invention relates to a laminate product, of leather, textile material or a textile or leather imitation, for example a portfolio, suitcase, garment, shoe or the like, furnished with a hook and loop fastener strip (2), the tapes of the fastener strip being attached to the product by bonding. Further, the invention relates to a method of attaching the tapes of the fastener strip to such a product, and to a device for practicing the method.

BACKGROUND OF THE INVENTION

1.      Technical Field

The invention relates to a product, of leather, textile material or a textile or leather imitation, for example a portfolio, suitcase, garment, shoe or the like, furnished with a hook and loop-type separable fastener strip to provide a closure. The invention also relates to a method and apparatus for making the product.

2.      Description of the Prior Art

Hook and loop fastener strips are well known and are used to join two parts detachably to each other. These fastener strips consist of mating fastener tapes having hooks and loops set respectively on either tape, which on being pressed together will interlock and so form a connection. Such fastener strips are employed primarily on wearing apparel, for example outer apparel, but are also often found on footwear and leather goods such as bags or the like.

For this purpose, it is necessary to attach the tapes of the fastener strips to panels or webs. A known method is to stitch the tapes to the webs. That procedure, however, is laborious, and above all, if the webs used are thin plastic film, the stitches are apt to tear out. Commonly, therefore, the tapes of the fastener strip are bonded to the webs. However, in order to obtain a satisfactory bonded connection, it is necessary as a rule, to press the areas to be joined against each other for a substantial length of time. Since the panels or webs heretofore used are unyielding, upon pressing the areas to be joined against each other (ordinarily in a hydraulic press of conventional type) the hooks and/or loops of the fastener strips are often so deformed and crushed against the tapes that satisfactory function of the fastener strip is no longer assured.

The present invention avoids these disadvantages and makes possible the construction of a product furnished with hook and loop-type fastener tapes, such that proper functioning of the fastener tape is ensured while preserving the requisite appearance and feel of the outer material.

## SUMMARY OF THE INVENTION

The present invention relates to a laminate product for use as a separable fastener for a product of an outer material having on the outer side, a predetermined outer appearance and texture, which comprises a first layer of outer material having on a first side, a predetermined appearance and texture, said material at least having compressible properties at least on the second side, and at least one strip of separable fastener material adhesively secured on a first side to the second side of said outer material layer, said strip of fastener material having upstanding from the second side, a plurality of hook and loop-type engaging elements such that said fastener material and said outer material layer may be selectively and repeatedly pressed into engagement with at least one strip of complementary hook and loop-type fastener material to form a closure.

In a leather, textile, or imitation textile or leather product furnished with a hook and loop-type fastener strip, the tapes of the fastener strip are joined to the product or a part of the product, by bonding to one side of a plastic or leather panel having no supporting function, the other side of the panel being provided with a cover layer which is preferably textured. For a plastic panel or web, a layer of compact polyvinyl chloride is provided having on the other side, a non-supporting foamed structure, preferably of the same material. The cover layer may be provided with a clear or colored "finish", for example of polyurethane or polymethyl methacrylate. In the manufacture of such a product furnished with a hook and loop-type fastener strip, the method comprises coating only the tape of the fastener strip with a heat-activatable adhesive and preferably airing it out, whereupon the adhesive-coated side is placed on one side of the panel and the other side of the latter is placed on a surface heated preferably to a temperature between 70° and 180°C, whereby a uniform pressure is then exerted on the area to be joined.

In a preferred embodiment the outer cover layer is plasticized polyvinyl chloride (PVC) having on one side an appearance and texture which complements the product of which it will form a closure - such as a shoe fastening - and on the other side an integral layer of closed cell foamed PVC having compressible and resilient properties, to which the hook and loop-type fastener strip is attached by heat activatable polyurethane adhesive. However, it should be appreciated that other materials such as leather fabrics, imitation leather, etc. are contemplated within the scope of the invention, as long as it has one side compressible - and preferably resilient - properties to provide a soft leather, or leather-like hand and attractive appearance. Also, all types of hook and loop-type separable fastener members are contemplated, such as those of woven and molded construction, and even those having upstanding hooks in the form of mushroom shapes on one side. The woven fasteners are generally of nylon, but may also be of other materials such as polyester or the like. The fastener member having hooks usually has nylon monofilamentary hooks and the complementary loop-type engaging elements usually include nylon multifilamentary loops or a thin or plush cut pile surface.

In the case of a plastic panel or web, because the tapes of the fastener strip are connected to the web which usually has no substantial supporting function, the plastic panel or web may be such that it will yield elastically when compressed, thus preventing any deformation of the hooks and/or loops of the fastener strip. Since the fastener tapes in any event - in effect - constitute a supporting member, it is not necessary that the plastic panels or webs to which the said tapes are connected should perform such a supporting function as well. This, however, has not been heretofore realized; on the contrary, the accepted opinion in the art has been that the fastener tapes must be connected to a part which performs a supporting function and is accordingly of appropriate solidity and strength. Since the side of the plastic panel or web which is opposed to the side connected to the tapes is furnished with a cover layer having an attractive appearance and feel suited to the leather or artificial leather of which the product is made, this is the side which is thus exposed to view. For plastic, the cover layer is preferably textured, exhibiting for example tne grained texture of leather, stitcaes or the like.

It is of particular advantage if the plastic panel or web has a foamed structure, possessing the requisite compressibility and/or elasticity. Thus for plastic or imitation leather, it has been found advantageous for the plastic panel or web to consist of plasticized polyvinyl chloride, compact on one side and foamed on the other, both being bonded integrally to each otner.

Natural leather has been found to have the requisite appearance and feel, as well as the desirable compressibility and elasticity such that a foam layer is not required. In this case the fastener tape is adhesively attached directly to the rear side of the leather according to the method disclosed herein.

To match the cover layer to the material of the product, it may be provided with a clear or colored "finish." For PVC, this finish may for example consist of polyurethane or of polymethacrylic acid methyl ester.

A method is described for attaching separable fastener tapes of the hook and loop-type to a panel of flexible material comprising applying adhesive capable of being activated by heat over the surface of the fastener tape having no engaging elements, positioning the adhesive coated surface of the fastener tape in contact with one side of the panel, positioning the other side of the panel against a heated surface, and applying pressure to the fastener strip so as to cause the fastener strip to become adhesively attached to the panel.

In the preferred embodiment, the method of the invention resides essentially in applying a coat of adhesive capable of being activated by heat, and preferably allowing the adhesive to air out, whereupon the side coated with adhesive is placed on one side of the panels or webs, while their other side is placed on a surface heated preferably to a temperature between 70° and 180°C. Pressure is then exerted on the area to be joined. Since the heat-activatable adhesive is applied only to the tapes of the fastener strip, and heat is supplied by way of the heated panels or webs when pressed together, whereby the adhesive is activated, a secure connection between the tapes of the fastener strip and the panels or webs - preferably having a foamed structure and not performing any supporting function - is thus guaranteed, even if little pressure is exerted.

It is expedient for the pressure to be exerted by way of a yielding surface, for example a flexible membrane, on that side of the area to be joined which is opposed to the side in contact with the heated surface. In this manner it is ensured that even if the area to be joined is not everywhere uniform in thickness, a uniform pressure will be exerted over this area nevertheless, since the yielding membrane will accommodate itself. This avoids the possibility that owing to a local high pressure in some parts, the hooks or loops of the fastener strip will otherwise be bent out of shape or permanently deformed. It has been found particularly expedient for the adhesive to be a heat-activatable polyurethane adhesive, whereby an excellent connection between the tapes of the fastener strip and the panels or webs is secured.

By heat activatable adhesive, it is contemplated preferably, to use an adhesive which becomes tacky on the application of heat, thereafter permitting the adhesive to cure by airing out once the connection is made. Also, other heat activatable adhesives which are actually cured by the application of heat are contemplated.

To shorten the time required to make the connection according to the invention, a hardener may be mixed with the adhesive before it is applied. In so doing, to be sure, care must be taken that the parts to be joined are heated in their correct position and are subjected to a pressure before the hardener takes effect.

The apparatus according to the invention for practicing the method consists essentially of a mold composed of at least two parts, one of which is provided with a heated surface, and in the other of which parts a membrane or the like, preferably of silicone rubber, opposed to the heated surface when the mold is closed, is stretched by its marginal edge portions. Thus, first the panel or web together with the fastener strip is placed on the heated surface of the one part, whereupon the mold is closed and the membrane or the like is pressed against the area to be connected, while, since the membrane or the like is yielding, the membrane accommodates itself to the surface, and therefore the desired compression is obtained in the area to be connected, while undesirable deformation is prevented.

According to another embodiment of the apparatus according to the invention, a die may be arranged on the heated surface, to dispose the webs and fastener strip in the desired joining position. This die, resting as it does on the heated surface, is heated likewise, so that in

this embodiment also, the heat is transmitted to the parts to be joined. Such an embodiment has the advantage that by a suitably configuration of the die, the cover layer may at the same time be embossed by means of the pressure exerted by way of the membrane or the like. The embossing may be in the form of a leather-look, stitches, or alternate design pattern.

According to a preferred embodiment of the invention, the heated surface forms the floor of a trough-like bottom mold, and the membrane or the like is mounted in a cover covering the said bottom mold. In such an embodiment, when the cover is open, the parts to be joined together may be placed on the heated surface, but the membrane or the like can be securely fixed in the cover. When the mold is closed, the requisite pressure can be applied to the parts to be joined by simple means. This may be done, according to a preferred embodiment of the invention, by providing the mold with at least one opening communicating with a vacuum system to set up a vacuum in the space between the membrane and the heated surface. By means of this vacuum, the membrane is pressed against the parts to be joined. In addition to the vacuum, or alternatively even instead of the vacuum, the membrane may be acted upon by a pressure medium. In that case, the mold is provided with at least one opening communicating with a source of pressure medium, preferably a source of compressed air, to supply pressure medium to the space bounded by the side of the membrane or the like away from the heated surface.

BRIEF DESCRIPTION OF THE DRAWINGS

Preferred embodiments of the invention will be described hereinbelow with reference to the drawings, wherein:

FIG. 1 is a cross-sectional view of a laminate product of the present invention; and

FIG. 2 is a cross-sectional view of the apparatus of the present invention.

BEST MODE FOR CARRYING OUT THE INVENTION

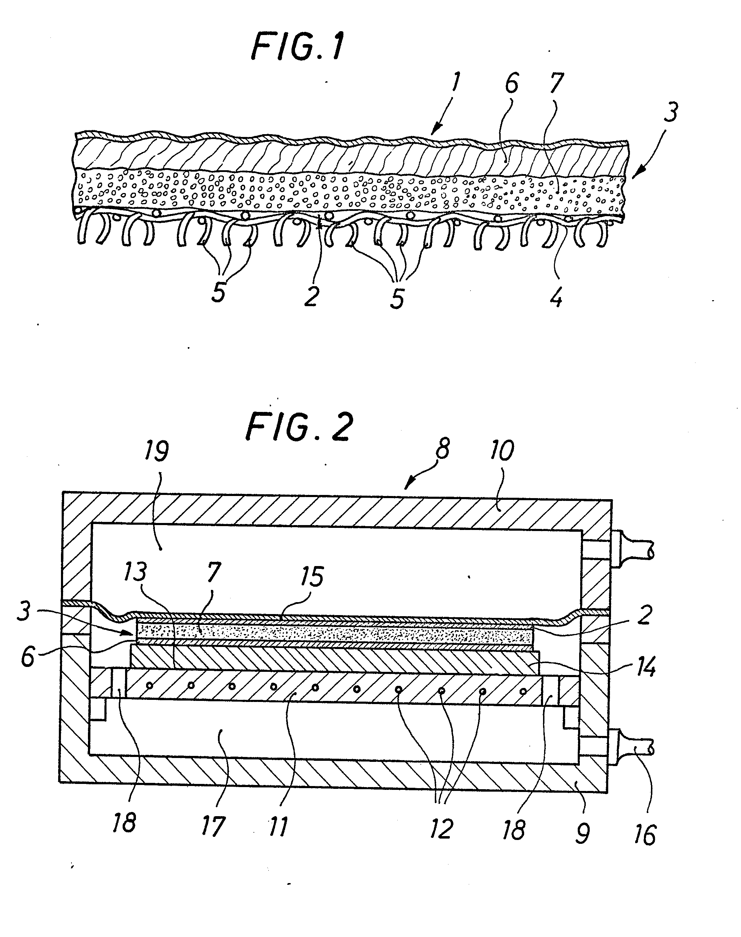

Referring to FIG. 1 the laminate product 1 of the present invention is illustrated in cross section. Separable fastener member 2 consisting of a polyester or a polyamide material such as nylon, has base strip 4 having upstanding from one surface, a plurality of hooks 5. The separable fastener member 2 is adhesively connected to a layer of plasticized polyvinyl chloride web 3 having a foamed structure as shown. The connection is made by first coating the hookless side of base strip 4 with a heat-activatable polyurethane adhesive, then placing the adhesive-coated side of the tape 2 into contact with the foamed web of plasticized polyvinyl chloride 3, and then subjecting the area to be joined to the action of pressure and heat.

On its other side, the web 3 is provided with a flexible cover material layer 6 consisting for example of a compact polyvinyl chloride. A foamed polyvinyl chloride layer 7 is positioned on the opposite side of cover layer 6 and preferably integral therewith. This cover layer forms the side of the product exposed to view, and accordingly is preferably textured, so that the outer appearance of the cover layer will match the artificial leather, imitation leather, natural leather, fabric, or other material of which the product (not shown) is made and of which the laminate product forms a fastening. The main product may be any product generally made of leather, imitation leather, fabric, etc., such as a footwear, portfolio, suitcase, garment bag, bag, etc.. In this instance, the cover layer 6 is preferably provided with a clear or colored finish of polyurethane or methyl polymethacrylate to provide a predetermined appearance and finish for the cover material layer 6.

It will be appreciated that the foamed structure 7 - preferably closed cell - of plasticized polyvinyl chloride web 3 provides unique compressibility and resilience which facilitates a soft hand and appearance similar to that provided by leather or heavy fabrics. These properties also facilitate maximum engagement of the hook-type engaging elements 1 with upstanding loop-type engaging elements of a complementary fastener strip (not shown) which may be attached in the same or other manner to a part of the product. The present laminate product 1, in combination with the complementary fastener, is intended to form a closure of the main product or of a portion or section of the main product.

The apparatus illustrated in FIG. 2 includes mold 8 having a trough-shaped bottom part 9 and a cover 10, tightly joined by suitable means to the bottom part 9 but selectively removable therefrom. In the bottom part 9, a plate 11 is arranged, in which electric heating wires 12 are embedded, so that the surface 13 of plate 11 is heated. On this heated surface 13 there is a die 14, which may be specially surfaced. On this die is laid the panel or web 3, with the side showing the cover layer 6 downward. On the other side of the panel or web 3, the tape 2, previously coated with a heat-activatable adhesive (as noted above), is laid. The heat-activatable adhesive is preferably allowed to air out before the tape 2 is placed on the panel or web 3.

In the cover 10, a flexible membrane 15 is so stretched such that when the cover 10 is placed on the bottom part 6, thus closing the mold, the membrane faces the tape 2 on the side of the hooks 5.

In operation, the membrane 15 is subjected to pressure. For this purpose, by way of a fitting 16, communicating by way of a suitable line (not shown) with a vacuum system (likewise not shown), a vacuum is produced in the space 17 under the plate 11. In this plate 11, at the marginal portions, are orifices 18, through which the vacuum communicates and is propagated into the chamber 19 bounded by the heated surface 13 and the membrane 15, whereby the membrane is forced against the area of connection between the tape 2 and the web 3. Before positioning the web 3 and tape 1 into position as shown the die 11 is pre-heated by means of the electric heating wires 12 to a temperature preferably between 70° and 180°C. The yielding membrane 15 accommodates itself to the surface of the tape 2, so that a uniform pressure is assured over the entire area of the tape 2. This ensures a secure connection between the tape 2 and the web 3 through the action of the adhesive which is activated by the heat thus supplied.

For the materials and the adhesive disclosed, the pressure is preferably maintained for about one minute. Thereafter, the cover 7 may be opened and the laminate product removed from the mold.

In addition to the vacuum applied, or alternatively even in place of such vacuum, the space 19 above the membrane may communicate by way of a fitting 20 and a line (not shown) with a source (likewise not shown) of pressure medium, whereby the membrane is simultaneously subjected to pressure in the downward direction of the mold, thus forcing it against the tape 2.

We claim:

1. A laminate product for use as part of a separable fastener, which comprises:

  a) a first layer of outer material having on a first side, a predetermined appearance and texture, said material at least having compressible properties at least on the second side; and

  b) at least one strip of separable fastener material adhesively secured on a first side to the second side of said outer material layer, said strip of fastener material having upstanding from the second side, a plurality of hook and loop-type engaging elements such that said fastener material and said outer material layer may be selectively and repeatedly pressed into engagement with at least one strip of complementary hook and loop-type fastener material to form a closure.

2. The laminate product according to claim 1 wherein said first layer of outer material is polyvinyl chloride.

3. The laminate product according to claim 1 wherein said first layer of outer material is natural leather.

4. A laminate product for use as a separable fastener for a product constructed at least in part, of an outer material having on the outer side, a predetermined outer appearance and texture, which comprises:

a) a first layer of outer material having on a first side, a predetermined outer appearance and texture which complements the appearance and texture of said outer material of the product, said material having compressible and resilient properties at least on the second side; and

b) at least one strip of separable fastener material adhesively secured on a first side to the second side of said outer material layer, said strip of fastener material having upstanding from the second side, a plurality of hook and loop-type engaging elements such that said fastener material and said outer material layer may be selectively and repeatedly pressed into engagement with at least one strip of complementary hook and loop-type fastener material secured at least in part to the product to selectively fasten and unfasten at least a part of the product.

5. The laminate product according to claim 4 further comprising a clear of colored finish layer on said first side of said outer material.

6. The laminate product according to claim 5 wherein said finish layer is polyurethane.

7. The laminate product according to claim 6 wherein the first layer of outer material is plasticized compact polyvinyl chloride having a foamed layer on the other side such that the layer has compressible and resilient properties.

8. The laminate product according to claim 4 wherein the product is natural leather having compressible properties.

9. The laminate product according to claim 8 wherein the natural leather has compressible and resilient properties.

10. The laminate product according to claim 7 wherein said layer of outer material is plasticized compact polyvinyl chloride material on one side, having a polyvinyl chloride foam structure integral therewith on the other side.

11. The laminate product according to claim 7 wherein said polyvinyl chloride material has a closed cell polyvinyl chloride foam structure on said other side and polyurethane adhesive is positioned between said polyvinyl chloride foam material and said strip of separable fastener material.

12. The laminate product according to claim 4 wherein said first layer of outer material is a flexible fabric material of the type usable for a main product such as a shoe, portfolio suitcase, garment, or the like.

13. A method for attaching separable fastener tapes of the hook and loop type to a panel of flexible material comprising:

a)    applying adhesive capable of being
      activated by heat over the surface of
      the fastener tape having no engaging
      elements;

b)    positioning the adhesive coated surface
      of said fastener tape in contact with
      one side of the panel;

c)    positioning the other side of the panel
      against a heated surface; and

d)    applying pressure to the fastener strip
      so as to cause the fastener strip to be
      adhesively attached to the panel.

14.    The method according to claim 13 wherein said
pressure is applied by a flexible member positioned
against the portions to be joined and opposed on the
opposite side by a heated surface.

15.    The method according to claim 14 wherein said
panel of flexible material at least has compressible
properties on at least one side, and said heated surface
is heated to a temperature between approximately 70° and
180°C.

16.    The method according to claim 15 wherein said
flexible member is a silicone rubber membrane.

17.    A method for attaching separable fastener
tapes of the hook and loop type to a panel of flexible
material for use as a closure for a product constructed of
an outer material which is complemented by said flexible
material which comprises:

a) taking a first flexible layer of outer material having on a first side, a predetermined appearance and texture which complements the material of the main product, said material having a layer of compressible material at least on the second side;

b) taking at least one strip of hook and loop type fastener tape having a plurality of upstanding hook and loop-type engaging elements upstanding from one side;

c) applying an adhesive capable of being activated by heat on the other side of the hook and loop-type fastener tape;

d) positioning the adhesively coated surface of the fastener tape in contact with the compressible material side of said panel;

e) positioning the other side of the panel against a heated surface which is heated to a temperature range sufficient to activate said adhesive; and

f) applying pressure to said fastener strip generally uniformly over the area to be joined so as to cause said fastener strip to be adhered to said panel while said pressure is resisted by said heated surface.

18. The method according to claim 17 wherein said adhesive is polyurethane adhesive.

19. The method according to claim 18 wherein said layer of compressible material has a foam structure which is compressible and resilient.

20. The method according to claim 19 wherein said panel is flexible compact polyvinyl chloride having a foamed structure on one side.

21. The method according to claim 20 wherein said foam structure is closed cell polyvinyl chloride foam having compressible and resilient properties.

22. The method according to claim 17 wherein said panel is a flexible material being at least one of leather, imitation leather or fabric.

23. Apparatus for attaching a separable fastener to a panel of flexible material to a second flexible member by heat activated adhesive comprising:

a) a mold having at least two mold components which are separable from each other, a first component being provided with a heated surface; and

b) a flexible membrane extending across a portion of the second mold component and facing the heated surface when the mold components are assembled, said mold components being dimensioned and configured such that upon assembly the membrane applies substantially uniform pressure to the members to be attached when positioned between the heated surface and the membrane.

24. The apparatus according to claim 23 wherein said heated surface is heated to a temperature between approximately 70° and 180°C.

25. The apparatus according to claim 23 wherein the two mold components are respectively upper and lower molds.

26. The apparatus according to claim 25 wherein the heated surface is the top surface of an electrically heated platen.

27. The apparatus according to claim 26 wherein a die is positioned on said heated surface, said die being dimensioned and configured to supportingly receive the panel of flexible material and the fastener tape thereon.

28. The apparatus according to claim 27 wherein said flexible membrane extends across the upper mold and the surface of said die is suitably patterned to provide an embossed pattern on the surface of the flexible material in contact therewith.

29. The apparatus according to claim 28 further comprising means for communicating the portion of the lower mold beneath said heated platen with a source of vacuum.

30. The apparatus according to claim 29 further comprising means for communicating a source of pressure medium with the space above said membrane of said upper mold.

31.  The apparatus according to claim 30 wherein said flexible membrane further comprises means for evacuating portions of the lower mold beneath the heated platen.

32.  The apparatus according to claim 31 further comprising means for applying pneumatic pressure to the portion of the upper mold above said membrane.

33.  The apparatus according to claim 32 wherein said lower mold is a trough shaped bottom mold.

34.  The apparatus according to claim 33 further comprising electrical heating wires embedded within said platen to provide heat to the top surface thereof.

35.  Apparatus for attaching a separable hook and loop type fastener tape to a panel of flexible material such as a polyvinyl chloride, leather, fabric or the like having compressible and resilient properties on at least one side, comprising:

  a)  a lower mold component having a trough-shaped configuration;

  b)  a platen extending across said lower mold component;

  c)  electrical heating wires embedded in said platen to supply heat to upper surface of said platen;

  d)  a die positioned on top of said panel to receive heat from said platen;

e)   an upper mold component which is selectively removable from said lower mold component and having a flexible membrane extending thereacross such that when said upper mold component is positioned on said lower mold, the membrane extends above said heated platen and die in a manner to apply uniform pressure to the fastener tape and the panel when positioned therebetween;

f)   means for communicating a vacuum system with said lower mold component for selectively evacuating the portion of the lower mold component below said heated platen and said membrane; and

g)   means for communicating the space above said flexible membrane with a source of compressed air such that the air pressure applied to said upper mold portion and the vacuum applied to said lower mold portion combine to provide uniform pressure to said fastener tape and said panel by said flexible membrane.

36.   The apparatus according to claim 35 wherein said electrical heating wires are capable of heating said platen and the upper surface of said die to a temperature between approximately 70° and 180°C to heat activate a polyurethane adhesive positioned between the separable fastener tape and the panel of flexible material.

37. A laminate panel for footwear fastenings, which comprises:

a) a flexible compact layer of polyvinyl chloride having on one side, a predetermined appearance and texture which complements the footwear, said compact layer of polyvinyl chloride layer having on the other side and integral therewith, a plasticized polyvinyl chloride foam layer;

b) at least one hook and loop-type fastener strip attached to said foam side of said polyvinyl chloride layer; and

c) a heat activated layer of polyurethane adhesive positioned between said polyvinyl chloride layer and said hook and loop-type fastener strip to secure said fastener strip to said polyvinyl chloride layer for use as a footwear fastening.

38. The laminate panel according to claim 37 wherein said fastener tape has a base member of nylon having upstanding therefrom, a multiplicity of nylon hook and loop-type engaging elements for engagement with a hook and loop-type fastener tape having a plurality of upstanding complementary engaging elements of the hook and loop-type.

39. The laminate panel according to claim 38 wherein said base member is woven of nylon yarn and said engaging elements are nylon monofilamentary hooks.

40. The laminate panel according to claim 38 wherein said base member is woven of nylon yarn and said engaging elements are nylon multifilament loops.

41. The laminate panel according to claim 38 wherein said base member is woven of polyester yarn and said engaging elements are polyester monofilamentary hooks.

42. The laminate panel according to claim 40 wherein said base member is woven of polyester yarn and said engaging elements are polyester multifilament loops.

43. The laminate panel according to claim 37 wherein said polyurethane adhesive is heat activated and caused to bond the hook and loop-type fastener strip to said foam side of said polyvinyl chloride layer by pressure.

## FIG.1

## FIG.2

European Patent
Office

EUROPEAN SEARCH REPORT

0152497
Application number

EP 84 10 1638

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 165 879 (SERATEC) <br> * Page 2, lines 25-40; page 3, lines 1-8, 27-40; page 4, lines 1-25; page 5, lines 24-30; page 7, lines 22-26; claims 1-8,11,16 * | 1,4,12 | A 44 B 18/00 <br> B 32 B 27/12 // <br> A 43 C 11/00 |
| A | | 37 | |
| A | BE-A- 754 975 (ANCIENS ETABLISSEMNETS JEAN PESSEMIER) <br><br> * Page 3, last paragraph; page 5, paragraph 2; page 6, paragraph 4; claims 1,6 * | 1,2,4, 5,7,10 ,11,18 -20,22 ,43 | |
| A | GB-A-1 415 852 (HAIRLOK LTD.) <br><br> * Page 1, lines 81-86; page 2, lines 3-15, 26-41, 57-69; claims 1,2 * | 1,2,4, 11,18, 21 | TECHNICAL FIELDS SEARCHED (Int. Cl.4) <br><br> A 44 B <br> A 41 D <br> A 41 F <br> D 06 N <br> B 32 B <br> A 43 C |
| A | FR-A-2 387 120 (GAF CORP.) <br><br> * Page 1, lines 3-17; page 2, lines 12-16, 34-38; page 3, lines 1-8; claim 1 * | 1,4-7, 10 | |

-/-

The present search report has been drawn up for all claims

| Place of search <br> THE HAGUE | Date of completion of the search <br> 29-10-1984 | Examiner <br> GARNIER F.M.A.C. |
|---|---|---|

European Patent Office

**EUROPEAN SEARCH REPORT**

0152497

Application number

EP 84 10 1638

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 063 075 (PIRELLI)<br><br>* Claims 1-3,5,6 * | 1,4-6,<br>11,15 | |
| A | DE-A-2 049 978 (DEUTSCHE SEMPERIT GUMMIWERK GmbH)<br>* Page 20, paragraph 3; claim 1 * | 1,3,4,<br>12 | |
| A | FR-A-1 511 450 (VEREINIGUNG VOLKSEIGENER BETRIEBE KONFEKTION)<br>* Page 1, column 2, the last 2 paragraphs; page 2 * | 13,14,<br>23-28,<br>34-36 | |
| A | GB-A-1 284 533 (MONTAGUE BURTON LTD.)<br>* Page 2, lines 3-15, 75-130; page 3, lines 1-17; claims 1,2,8-12 * | 13,15,<br>18,29 | TECHNICAL FIELDS SEARCHED (Int. Cl.4) |
| A | FR-A-2 055 755 (G. HAFFNER)<br><br><br><br>* Whole document * | 13-16,<br>23-25,<br>28,30,<br>32,35,<br>36 | |
| A | US-A-3 594 873 (AMERICAN VELCRO)<br>* Column 1, lines 61-75; column 2, lines 15-24; column 3, lines 19-35 * | 39,40 | |

-/-

The present search report has been drawn up for all claims

| Place of search<br>THE HAGUE | Date of completion of the search<br>29-10-1984 | Examiner<br>GARNIER F.M.A.C. |
|---|---|---|

European Patent Office

**EUROPEAN SEARCH REPORT**

0152497
Application number

EP 84 10 1638

Page 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 534 780 (AMERICAN VELCRO) --- | 41 | |
| A | US-A-3 154 837 (INTERNATIONAL VELCRO COMPANY) * Column 2, lines 20-71; column 3, lines 1-5; claim * --- | 40,42 | |
| E | DE-A-3 230 956 (DISTROPAT AG) * Whole document * ----- | 1-43 | |

TECHNICAL FIELDS
SEARCHED (Int. Cl.4)

The present search report has been drawn up for all claims

| Place of search THE HAGUE | Date of completion of the search 29-10-1984 | Examiner GARNIER F.M.A.C. |
|---|---|---|